# EUROPEAN PATENT APPLICATION

(11) **EP 4 389 694 A1**
(43) Date of publication of application: **26.06.2024**
(21) Application number: 22216610.0
(22) Date of filing: 23.12.2022
(51) Int. Cl.: C01B 3/04, C01B 3/34

(54) **PROCESS FOR PRODUCING SYNTHESIS GAS PRODUCT COMPRISING HYDROGEN**

(71) Applicant: L'AIR LIQUIDE, SOCIETE ANONYME POUR L'ETUDE ET L'EXPLOITATION DES PROCEDES GEORGES CLAUDE, 75007 Paris (FR)
(72) Inventor: ULBER, Dieter, 60439 Frankfurt / Main (DE); COSCIA, Antonio, 60439 Frankfurt am Main (DE)
(74) Representative: Air Liquide

(57) **Abstract**

A process for producing a synthesis gas product by an endothermic reaction of a feedstock stream, said process comprising the following steps:
- Providing an ammonia fuel stream,
- Performing a first combustion in which the ammonia fuel stream is partially burned, generating heat and a combustion flue gas stream comprising an unburned portion of ammonia fuel stream being not burned,
- Providing heat from the first combustion and from the combustion flue gas stream to the endothermic reaction, thereby obtaining a cooled flue gas stream,
- Performing a second combustion of the cooled flue gas stream in which the unburned portion of ammonia fuel stream is burned,
- Providing heat from the second combustion to the endothermic reaction.

## Description

The field of the present invention is that of process for producing a synthesis gas product. The invention relates particularly to a process for producing a synthesis gas product comprising hydrogen by an endothermic reaction of a feedstock stream. The invention also relates to a furnace for producing a synthesis gas product comprising hydrogen by an endothermic reaction of a feedstock stream.

The production of a synthesis gas product comprising hydrogen by an endothermic reaction of a feedstock stream can be done in a catalytic unit at elevated temperatures, for example from 400°C to 800°C. Such a unit typically comprises a metallic shell, a catalyst and an external heat source. To achieve a lowest possible CO2 footprint for the process, the external heat source is provided by a single combustion of an ammonia fuel stream in a furnace. The process requires a high quantity of heat and energy.

The disadvantage of such process is that the ammonia fuel has poor combustion properties such as a low flame speed, a small explosion window, a high ignition temperature resulting in an unstable flame and unwanted emissions such as unconverted ammonia and Nitrogen Oxides (NOx).

The invention proposes a process for producing a synthesis gas product comprising hydrogen from a feedstock in which the ammonia fuel combustion is improved.

In the present disclosure, the ammonia fuel stream is also referred as ammonia fuel.

For this purpose, the invention proposes a process for producing a synthesis gas product, in particular a synthesis gas product comprising hydrogen, by an endothermic reaction of a feedstock stream, said process comprising the following steps:
- Providing an ammonia fuel stream,
- Performing a first combustion in which the ammonia fuel stream is partially burned, generating heat and a combustion flue gas stream comprising an unburned portion of ammonia fuel stream being not burned,
- Providing heat from the first combustion and from the combustion flue gas stream to the endothermic reaction, thereby obtaining a cooled flue gas stream,
- Performing a second combustion of the cooled flue gas stream in which the unburned portion of ammonia fuel stream is burned,
- Providing heat from the second combustion to the endothermic reaction.

The first combustion is performed during a first combustion step, and the second combustion is performed during a second combustion step.

The second combustion of the unburned portion of ammonia fuel stream allows a complete combustion of the ammonia fuel stream, improves the heat and minimize the NOx and unconverted ammonia emissions.

According to one aspect of the invention, the feedstock stream is an ammonia feedstock stream and the endothermic reaction is an endothermic cracking reaction of the ammonia feedstock stream.

According to one aspect of the invention, the endothermic reaction is performed catalytically over a catalyst that promotes the endothermic reaction.

According to one aspect of the invention, the process comprises a step of conditioning the ammonia fuel stream, such as vaporizing the ammonia fuel stream, said step of conditioning the ammonia fuel stream following the step of providing the ammonia fuel stream.

According to one aspect of the invention, the second combustion is performed non-catalytically. In other words, the second combustion is performed is absence of any catalyst to promote oxidation of ammonia.

According to one aspect of the invention, the first combustion is performed non-catalytically.

According to one aspect of the invention, the first combustion is performed in at least one fired equipment. The term of fired equipment denotes that the second combustion is made with formation of a flame.

According to one aspect of the invention, the first and second combustions are performed in a firing chamber in which heat from the first and second combustions is provided to the endothermic reaction. In particular, the ammonia fuel stream and the combustion flue gas stream circulate in a circulation channel of the firing chamber.

A non-catalytic combustion of ammonia converts the ammonia into nitrogen (N2) and water (H2O), with only a minor amounts of nitrogen oxides.

According to one aspect of the invention, the first combustion is made by feeding a first oxidant flow to the ammonia fuel stream, and the second combustion is made by feeding a second oxidant flow to the unburned portion of ammonia fuel stream.

According to one aspect of the invention, a first oxidant comprises a first combustion air, and the second oxidant comprises a second combustion air.

According to one aspect of the invention, the first combustion is performed in a first combustion zone of the firing chamber, and the second combustion is performed in a second combustion zone of the firing chamber, and the flue gas stream generated by the first combustion of the ammonia fuel in the first combustion zone flows to the second combustion zone for the second combustion step.

According to one aspect of the invention, the first combustion zone is located in a first combustion chamber of the firing chamber and the second combustion zone is located in a second combustion chamber of the firing chamber, the combustion chambers being fluidically connected by a portion of the circulation channel.

According to one aspect of the invention, a common oxidant flow is supplied by a common distribution manifold, the common oxidant flow being then split into the first and the second oxidant flow.

According to one aspect of the invention, the common oxidant flow is split into the first and the second oxidant flow by a flow separator, such as a valve, a plate, an orifice, or openings.

According to one aspect of the invention, the first oxidant flow is supplied to the first combustion zone by a dedicated first distribution manifold, and the second oxidant flow is supplied to the second combustion zone by a dedicated second distribution manifold.

According to one aspect of the invention, the common oxidant flow is split into the first and the second oxidant flows upstream the first and second distribution manifolds in the oxidant flow circulation direction.

According to one aspect of the invention, the second oxidant flow is fed downstream the first oxidant flow in the ammonia fuel or flue gas stream circulation direction. The flue gas stream is generated by the first combustion of the ammonia fuel. The flue gas stream comprises the unburned portion of ammonia fuel gas stream following the first combustion and the combustion products, in other words nitrogen and water, of the first combustion.

According to one aspect of the invention, the first oxidant flow is injected in the circulation channel, the second oxidant flow being injected in said circulation channel downstream of the first oxidant flow in the ammonia fuel stream circulation direction.

According to one aspect of the invention, the second oxidant flow and the first oxidant flow have the same composition.

According to one aspect of the invention, the second oxidant flow and the first oxidant flow have a different composition.

According to one aspect of the invention, the process comprises a step of controlling the first oxidant flow so as to reach a near stochiometric value for the first combustion.

According to one aspect of the invention, the first combustion is performed with a lambda value comprised between 0,9 and 1,1, preferably between 0.95 and 1.03. The lambda value is the mass ratio of oxidant and fuel during the combustion.

According to one aspect of the invention, the process comprises a step of controlling the second oxidant flow.

According to one aspect of the invention, the second combustion is performed with a lambda value of at least 1.

According to one aspect of the invention, the process comprises a step for controlling the second oxidant flow so as to combust all the unburned portion of ammonia.

According to one aspect of the invention, the second combustion step leads to the combustion of at least 90% of the flue gas stream, preferably 100% of the flue gas stream.

According to one aspect of the invention, the second distribution manifold comprises a plurality of ducts, all the ducts being centrally controlled. In other words, the ducts are not individually controlled.

According to one aspect of the invention, the process comprises a step of providing the feedstock stream.

According to one aspect of the invention, the process comprises a conditioning step of the feedstock stream, said conditioning step following the feedstock stream providing step. Thus, a conditioned feedstock stream is obtained.

According to one aspect of the invention, the endothermic reaction converts the conditioned feedstock stream into a synthesis gas product, in particular a synthesis gas product comprising hydrogen.

According to one aspect of the invention, the synthesis gas product comprises hydrogen and nitrogen. In particular, the synthesis gas product comprises an unconverted portion of ammonia. In other words, the synthesis gas product comprises hydrogen, nitrogen and an unconverted portion of the ammonia feedstock stream not being converted by the endothermic cracking reaction of the ammonia feedstock.

According to one aspect of the invention, the process comprises a step of releasing the synthesis gas product.

According to one aspect of the invention, the process comprises a step of processing the synthesis gas product following the step of releasing said synthesis gas product. The step of processing can be for example a purification step.

According to one aspect of the invention, the step of processing the synthesis gas product is a purification step, said purification step using a method such as Pressure Swing Adsorption (acronym PSA), cryogenic separation, membranes, Temperature Swing Adsorption (acronym TSA).

According to one aspect of the invention, the feedstock stream conditioning step comprises vaporizing (thereby obtaining a gas feedstock stream), preheating and/or superheating the feedstock stream.

According to one aspect of the invention, the heat for vaporization, preheating and/or superheating during the feedstock stream conditioning step is provided by the combustion steps which are performed in the firing chamber.

The invention also relates to a furnace for producing a synthesis gas product, in particular a synthesis gas product comprising hydrogen, by an endothermic reaction of a feedstock stream, said furnace comprising:
- A firing chamber comprising at least one burner arranged for an ammonia fuel stream combustion,
- A least one reactor configured to produce a synthesis gas product, in particular a synthesis gas product comprising hydrogen, by an endothermic reaction of a feedstock stream, said reactor being arranged to be heated by the firing chamber,
- a first distribution manifold configured to feed the firing chamber with a first oxidant flow for burning partially the ammonia fuel stream and generate a flue gas stream comprising an unburned portion of ammonia,
- a second distribution manifold configured to feed the firing chamber with a second oxidant flow for combusting the unburned ammonia.

Such a furnace allows to improve the combustion of the ammonia fuel stream and reduce the NOx and unburned ammonia emissions.

According to one aspect of the invention, a first oxidant comprises a first combustion air, and the second oxidant comprises a second combustion air.

In one aspect of the invention, the firing chamber comprises a first combustion zone and a second combustion zone, said combustion zones being fluidically connected to one another.

In one aspect of the invention, the first combustion zone is configured for burning the ammonia fuel stream in a first combustion thereby generating heat and the combustion flue gas stream, and the second combustion zone is configured for burning the unburned portion of ammonia fuel stream in a second combustion, the first and the second combustions zones being fluidically connected to one another.

In one aspect of the invention, the second combustion zone is arranged in the firing chamber downstream of the first combustion zone in the fuel stream and combustion flue gas stream circulation direction.

In one aspect of the invention, the firing chamber comprises a circulation channel, said circulation channel being arranged for the circulation of the ammonia fuel stream and the combustion flue gas stream.

In one aspect of the invention, the first distribution manifold is arranged to inject the first oxidant in the circulation channel and the second distribution manifold is arranged to inject the second oxidant in the circulation channel downstream of the first oxidant flow injection in the ammonia fuel stream circulation direction.

In one aspect of the invention, the furnace comprises at least one flue gas exhaust duct, such as a flue gas exhaust tunnel, having a combustion flue gas intake to collect the combustion flue gas stream from the first combustion of the ammonia fuel stream, the flue gas exhaust duct being configured to discharge said combustion flue gas from the furnace. In particular, a portion of the flue gas exhaust duct is extending inside the firing chamber, in the second combustion zone and the combustion flue gas intake is arranged on said portion of the flue gas exhaust duct.

In one aspect of the invention, the second manifold is arranged for distributing the second oxidant flow in the flue gas exhaust duct, upstream of the combustion flue gas intake.

In one aspect of the invention, the furnace comprises a flow separator configured to split a common oxidant flow into the first oxidant flow and the second oxidant flow.

In one aspect of the invention, the flow separator is configured to control the second oxidant flow circulating through the second distribution manifold.

In one aspect of the invention, the first distribution manifold and the second distribution manifold are both fluidically connected to the flow separator.

In one aspect of the invention, the first distribution manifold and the second distribution manifold are fluidically connected together by the flow separator only.

According to one aspect of the invention, the flow separator is located upstream the first and the second distribution manifolds.

In one aspect of the invention, the flow separator is a valve, for example a manual valve or an automatic valve.

In one aspect of the invention, the second distribution manifold comprises a plurality of ducts, all the ducts being arranged to be centrally controlled.

According to one aspect of the invention, the furnace comprises a plurality of reactors arranged for the endothermic reaction and a plurality of burners.

According to one aspect of the invention, the reactors are fluidically arranged parallel to each other.

Further features, details and advantages of the invention will become more clearly apparent from reading the description given below by way of indication with reference to the drawings, in which:
[FIG. 1] is a schematic representation of the process of the present invention,
[Fig. 2] is a schematic view of a furnace of the invention,
[Fig. 3] is a schematic view of a reactor of the furnace of the invention,

It should first of all be noted that the figures disclose the invention in a detailed manner so as to implement the invention, and said figures may of course serve to define the invention more clearly, where necessary.

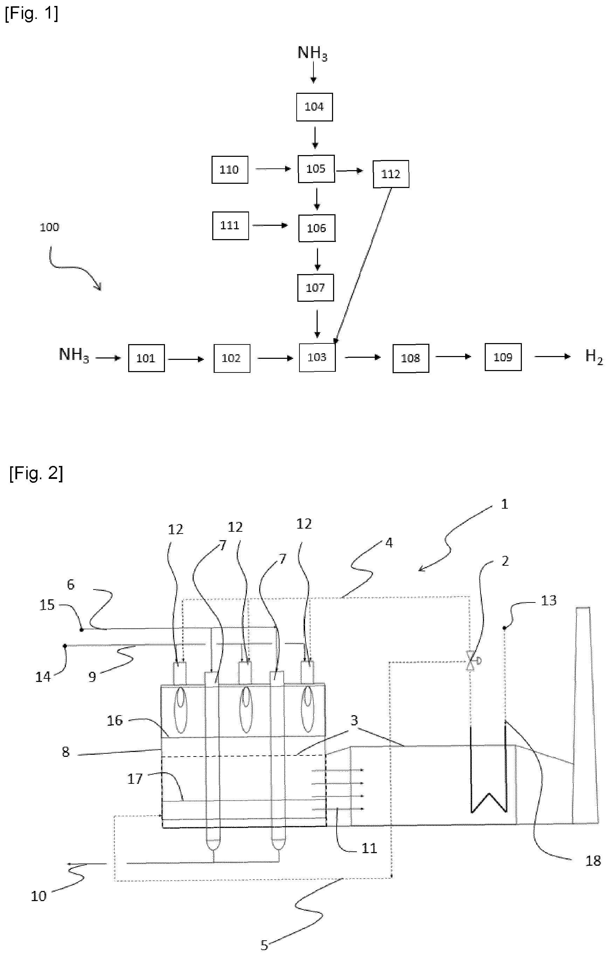

Figure 1 shows a process 100 for producing a synthesis gas product comprising hydrogen by an endothermic cracking reaction of an ammonia feedstock stream. However, it is to be noted that the inventions covers all kinds of endothermic reaction, such as steam methane reforming.

### The process comprises the following steps:

, The invention proposes a process comprising the following steps:
- Providing an ammonia feedstock stream 101 comprising ammonia,
- Providing an ammonia fuel comprising ammonia,
- Performing a first combustion 105 in which the ammonia fuel stream is partially burned, generating heat and a combustion flue gas stream comprising an unburned portion of ammonia fuel stream being not burned,
- Providing heat 112 from the first combustion 105 and from the combustion flue gas stream to the endothermic cracking reaction, thereby obtaining a cooled flue gas stream,
- Performing a second combustion 106 of the cooled flue gas stream in which the unburned portion of ammonia fuel stream is burned,
- Providing heat 107 from the second combustion 106 to the endothermic cracking reaction 103.

The process also comprises the following steps:
- Conditioning said ammonia feedstock stream 102,
- Releasing the synthesis gas product 108,
- Processing the synthesis gas product 109,

The steps 101-108 and 110-112 are performed in a furnace for producing a synthesis gas product comprising hydrogen by an endothermic cracking reaction of an ammonia feedstock stream (see figure 2).

Here, the conditioning step 102 is for example, but not limited to, a vaporization step of the ammonia feedstock stream.

The catalytic conversion 103 is a cracking reaction of the ammonia feedstock stream, which is an endothermic reaction requiring heat. The catalytic conversion is performed in presence of an active catalyst which promotes the endothermic cracking reaction of the ammonia feedstock when heat is provided to said catalytic conversion.

The process comprises two combustion steps 105 and 106. To achieve these two combustions, first an ammonia fuel stream is provided to a combustion zone of a furnace 104. The ammonia fuel stream is distributed to the combustion zone by an ammonia fueling manifold 9.

A first oxidant flow, here a first combustion air flow is provided 110 by a first distribution manifold. The first combustion air flow provided is fed to the ammonia fuel stream and the first combustion 105 is realized. A portion of the ammonia fuel stream remains unburned, in other words, this first combustion 105 is a partial combustion of the ammonia fuel stream. Once the first combustion is realized, a flue gas stream from the first combustion 105 is collected by a flue gas exhaust duct, such as a tunnel, to be discharged.

Downstream this first combustion105, the second combustion 106 is realized. To perform the second combustion 106, a second oxidant flow, here a second combustion air flow 111 is provided by a second distribution manifold. The second combustion air flow is fed to the unburned portion of ammonia fuel gas stream and this unburned portion is combusted during the second combustion 106. The second distribution manifold is arranged for distributing the second combustion air flow in the flue gas exhaust duct upstream of the combustion flue gas intake.

The lambda value is the ratio of the oxidant, here the combustion air flow, divided by the stoichiometric combustion air flow related to the fuel composition and fuel flow. The first combustion is performed at a lambda value comprised between 0,9 and 1,1, preferably between 0.95 and 1.03. The second combustion is performed at a lambda value of at least 1. Thus, the second combustion is performed at over-stoichiometric conditions and leads to a better combustion yield.

The heat from these two combustions is transferred from this combustion zone to the catalytic endothermic cracking reaction by convection and conduction.

Following the catalytic endothermic cracking reaction, the synthesis gas product comprises hydrogen, nitrogen and a portion of unconverted ammonia feedstock.

The process comprises a releasing step 107 of the synthesis gas product. During this step, the synthesis gas product is released from the reactor in which the endothermic cracking reaction occurs to be treated in a processing step 108 if needed. For example, this processing step can be a purification step. This purification step uses classical purification methods, such as such as PSA, cryogenic separation, membranes, TSA. Purified hydrogen is thus obtained.

Figure 2 is a schematic representation of a furnace 1 for producing a synthesis gas product comprising hydrogen by an endothermic cracking reaction of an ammonia feedstock stream according to the invention.

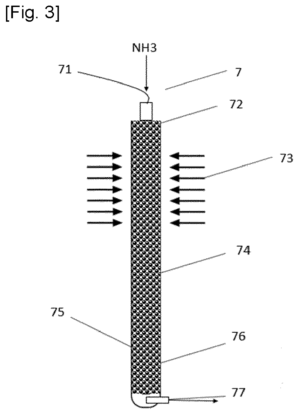

The furnace 1 comprises here a plurality of reactors 7 configured for producing a synthesis gas product comprising hydrogen by an endothermic cracking reaction of an ammonia feedstock stream. The reactors 7 are disclosed is the figure 3. Here the reactors are fluidically arranged in parallel to each other.

The reactors 7 are fed with an ammonia feedstock stream by an ammonia feedstock stream manifold 6. The ammonia feedstock stream comes from an ammonia feedstock source 15 which is out of the furnace 1.

The synthesis gas product comprising hydrogen is collected by a collector duct 10.

Each reactor 7 is disposed inside a firing chamber 8 comprised in the furnace 1.

The firing chamber 8 comprises here a first combustion zone 16 arranged to perform the first combustion and a second combustion zone 17 arranged to perform the second combustion. The first 16 and the second combustion zones 17 are fluidically connected. The first 16 and second 17 combustion zones are fed with an ammonia fuel stream thanks by a fueling channel 9. The ammonia fuel stream comes from an ammonia fuel stream 14 source.

A common oxidant flow, here a common combustion air flow comes from an oxidant source, here a combustion air source 13. The combustion air flow is distributed from said combustion air source 13 through a common distribution manifold 18. The common combustion air flow is split by a flow separator 2 into a first combustion air flow and a second combustion air flow.

A first distribution manifold 4 is configured to feed the ammonia fuel stream with the first combustion air flow. The first distribution manifold 4 extends from the flow separator 2, configured to control the flow rate of the first combustion air flow, to the first combustion zone 16. Here a first combustion of the ammonia fuel stream is performed. This first combustion is a partial combustion; hence it remains a portion of unburned ammonia fuel stream. A flue gas stream 11, comprising the portion of unburned ammonia, results of this first combustion which is collected by a flue gas exhaust duct 3 and then discharged from the furnace by said flue gas exhaust duct 3.

The furnace 1 comprises a second distribution manifold 5 of the combustion air flow. This second distribution manifold 5 is arranged for distributing the second combustion air flow in the flue gas exhaust duct 3 upstream of the combustion flue gas intake. The second distribution manifold 5 extends from the flow separator 2 to the second combustion zone 17 of the firing chamber 8. Here a second combustion is performed in order to combust the unburned portion of the ammonia fuel gas stream from the first combustion.

The flow separator 2 is for example a valve arranged to split the common combustion air flow from the combustion air source 13 into the first and second combustion air flows, and control the flow rate of the first and the second combustion air flows.

The reactors 7 are shown in the figure 3 comprise an outer shell tube, said outer shell tube being pressurized. The outer shell tube comprises a reaction chamber 75 in which a catalytic conversion, here the endothermic cracking reaction, of the ammonia feedstock stream is realized. The reactors 7 comprise an ammonia feedstock stream inlet 71, the inlet 71 being configured to let the fluid in the shell tube 72, and more precisely in the reaction chamber 75.

The reaction chamber 75 comprises a layer of an active solid catalyst 76, said catalyst 76 being configured to promote the endothermic cracking reaction of the ammonia feedstock stream into a synthesis gas product comprising hydrogen. The catalyst is for example a dumped bed catalyst or a structured catalyst. In a preferred embodiment, the catalyst comprises nickel. The ammonia feedstock stream circulates in the active catalyst 76 bed where the endothermic cracking reaction occurs. This reaction is possible only at a high temperature, so heat 73 is provided to the reaction chamber 75.

The catalyst bed 76 is configured to be heated by the heat from an external heat source, here the first and the second combustions described above.

The reactor comprises an outlet 77 for the synthesis gas product comprising hydrogen.

## Claims

1. A process (100) for producing a synthesis gas product by an endothermic reaction of a feedstock stream, said process comprising the following steps:
• Providing an ammonia fuel stream (101),
• Performing a first combustion (105) in which the ammonia fuel stream is partially burned, generating heat and a combustion flue gas stream comprising an unburned portion of ammonia fuel stream being not burned,
• Providing heat (112) from the first combustion (105) and from the combustion flue gas stream to the endothermic reaction, thereby obtaining a cooled flue gas stream,
• Performing a second combustion (106) of the cooled flue gas stream in which the unburned portion of ammonia fuel stream is burned,
• Providing heat (107) from the second combustion (106) to the endothermic reaction.

2. A process (100) according to claim 1, wherein the first combustion (105) is made by feeding a first oxidant flow to the ammonia fuel stream, and the second combustion (106) is made by feeding a second oxidant flow to the unburned portion of ammonia fuel stream.

3. A process (100) according to any of claims 1 or 2, wherein the first combustion and the second combustion are performed in a firing chamber in which heat from the first combustion and the second combustion is provided to the endothermic reaction and the first combustion (105) is performed in a first combustion zone of the firing chamber, and the second combustion is performed in a second combustion zone of the firing chamber, and the flue gas stream generated by the first combustion of the ammonia fuel in the first combustion zone flows to the second combustion zone for the second combustion step.

4. A process (100) according to any of claims 1 to 3, wherein it comprises a step of controlling the first oxidant flow so as to reach a near stochiometric value for the first combustion.

5. A process (100) according to any of claims 1 to 4, wherein the first combustion (105) is performed with a lambda value comprised between 0,9 and 1,1, preferably between 0.95 and 1.03.

6. A process (100) according to any of claims 1 to 5, wherein the second combustion (106) is performed with a lambda value of at least 1.

7. A process (100) according to claim 3 and any of claims 1 to 6, the second oxidant flow being supplied to the second combustion zone by a dedicated second distribution manifold, said second distribution manifold comprising a plurality of ducts, all the ducts being centrally controlled.

8. A furnace (1) for producing a synthesis gas product by an endothermic reaction of a feedstock stream, said furnace comprising:
• A firing chamber (8) comprising at least one burner (12) arranged for an ammonia fuel stream combustion,
• A least one reactor (7) configured to produce synthesis gas product by an endothermic reaction of a feedstock stream, said reactors being arranged to be heated by the firing chamber (8),
• a first distribution manifold (4) configured to feed the firing chamber with a first oxidant flow for burning partially the ammonia fuel stream and generate a flue gas stream comprising an unburned portion of ammonia,
• a second distribution manifold (5) configured to feed the firing chamber with a second oxidant flow for combusting the unburned ammonia.

9. A furnace (1) according to claim 8, wherein the firing chamber (8) comprises a first combustion zone (16) and a second combustion zone (17), said combustion zones (16, 17) being fluidically connected to one another, the first combustion zone (16) being configured for burning the ammonia fuel stream in a first combustion thereby generating heat and the combustion flue gas stream, and the second combustion zone (17) being configured for burning the unburned portion of ammonia fuel stream in a second combustion, the first and the second combustion zones (16, 17) being fluidically connected to one another.

10. A furnace (1) to any of claims 8 or 9, wherein the firing chamber comprises a circulation channel, said circulation channel being arranged for the circulation of the ammonia fuel stream and the combustion flue gas stream and the first distribution manifold is arranged to inject the first oxidant in the circulation channel and the second distribution manifold is arranged to inject the second oxidant in the circulation channel downstream of the first oxidant flow injection in the ammonia fuel stream direction.

11. A furnace (1) according to any of claims 9 or 10, wherein the furnace comprises at least one flue gas exhaust duct (3), such as a flue gas exhaust tunnel, having a combustion flue gas intake to collect the combustion flue gas stream from the first combustion of the ammonia fuel stream, the flue gas exhaust duct being configured to discharge said combustion flue gas from the furnace.

12. A furnace (1) according to claim 11, wherein a portion of the flue gas exhaust duct (3) is extending inside the firing chamber (8), in the second combustion zone (17) and the combustion flue gas intake is arranged on said portion of the flue gas exhaust duct (3).

13. A furnace (1) according to any of claims 8 to 12, wherein the furnace comprises a flow separator (2) configured to split a common oxidant flow into the first oxidant flow and the second oxidant flow.

14. A furnace (1) according to any of claims 8 to 13 wherein the first distribution manifold (4) and the second distribution manifold (5) are both fluidically connected to the flow separator (2).

15. A furnace according to any of claims 8 to 14, wherein the second distribution manifold (5) comprises a plurality of ducts, all the ducts being arranged to be centrally controlled.
